# EUROPÄISCHE PATENTSCHRIFT

(11) **EP 1 031 100 B1**
(45) Veröffentlichungstag und Bekanntmachung des Hinweises auf die Patenterteilung: **23.04.2003**
(21) Anmeldenummer: 97950151.7
(22) Anmeldetag: 10.11.1997
(51) Int. Cl.: G06F 17/30

(54) **VERFAHREN ZUM VERWALTEN VON DOKUMENTEN**
METHOD FOR MANAGING DOCUMENTS
PROCEDE DESTINE A LA GESTION DE DOCUMENTS

(43) Veröffentlichungstag der Anmeldung: 30.08.2000
(73) Patentinhaber: winrechte GmbH, 28329 Bremen (DE)
(72) Erfinder: David, Anja, 44269 Dortmund (DE)
(74) Vertreter: Behrendt, Arne, Dipl.-Ing.
(86) Internationale Anmeldenummer: EP9706228
(87) Internationale Veröffentlichungsnummer: WO99024920

(56) Entgegenhaltungen:
- EP-A- 0 032 194
- EP-A- 0 550 368
- EP-A- 0 665 499
- WO-A-95/16241
- ANONYMOUS: "Induction of Rules for Document Classification" IBM TECHNICAL DISCLOSURE BULLETIN, Bd. 36, Nr. 6B, Juni 1993, NEW YORK, US, Seiten 495-498, XP002068955

## Beschreibung

Die vorliegende Erfindung betrifft ein Verfahren zum Verwalten von Dokumenten auf einem System von mindestens einer elektronischen Datenverarbeitungsanlage mittels mindestens einer Datenbank und außerdem einen Gerätetreiber für elektronische Datenverarbeitungsanlagen zur Durchführung dieses Verfahrens.

Als Dokumente im Sinne der vorliegenden Patentanmeldung werden sowohl digitale Datelen in unterschiedlichen Formaten als auch ganze Anwendungsprogramme für elektronische Datenverarbeitungsanlagen verstanden, bestehend aus einer oder mehreren Dateien. Dokumente im Sinne dieser Patentanmeldung sind somit eine oder mehrere digitale Dateien mit einem beliebigen Informationsgehalt.

Nach dem Stand der Technik ist es bekannt, daß Dokumente mittels Datenbanken auf elektronischen Datenverarbeitungsanlagen verwaltet werden. Für verschiedene Einsatzbereiche werden dabei unterschiedliche Arten von Datenbanken, wie beispielsweise relationale, objektorientierte oder Volltext-Datenbanken, oder aber auch Kombinationen verschiedener Datenbanken eingesetzt. Unabhängig von der Art der eingesetzten Datenbank bietet diese den Vorteil, daß sie über umfangreiche Zugriffs- und Verwaltungsmechanismen verfügt, über welche die darin abgelegten Dokumente bzw. Querverweise auf dieselben zeitoptimiert und komfortabel verwaltet werden können.

Um Anwendungsprogrammen, die keinen oder nur einen eingeschränkten funktionalen Zugang zu Datenbanken haben, die Möglichkeit zu geben, diese umfangreichen Zugriffs- und Verwaitungsmechanismen einer Datenbank auszunutzen, muß jedoch eine Kommunikationsverbindung zwischen der Datenbank einerseits und dem Betriebssystem und den Anwendungsprogrammen andererseits hergestellt werden. Dann können die Anwendungsprogramme unter Vermittlung des Betriebssystems auf die Datenbank zugreifen. Um die Kommunikationsverbindung herzustellen, müssen sowohl das Betriebssystem und/oder die Anwendungsprogramme als auch die Datenbank über geeignete Kommunikations-Schnittstellen verfügen. Außerdem müssen zwischen diesen Kommunikations-Schnittstellen Anpassungen angeordnet sein, die zum großen Teil eigens programmiert und auf die Datenbank und das jeweilige Anwendungsprogramm adaptiert werden müssen. Die Anpassungen sind beispielsweise als Makros in der speziellen Makrosprache des Jeweiligen Betriebssystems und/oder Anwendungsprogrammes ausgebildet. Der Einsatz neuer Versionen der Anwendungsprogramme macht oft eine Überarbeitung der Anpassungen erforderlich. Abgesehen von dem großen Autwand für die Erstellung, Adaption und Wartung solcher Anpassungen weist eine derartige Kommunikationsverbindung zwischen den Anwendungsprogrammen und der Datenbank weitere Nachteile auf. So sind programmierte Anpassungen anwendungsprogrammspezifisch und weisen nur einen beschränkten Zugang zur Funktionalität der jeweiligen Datenbank-Umgebung auf.

Eine andere nach dem Stand der Technik bekannte und heute weit verbreitete Möglichkeit, Dokumente auf elektronischen Datenverarbeitungsanlagen zu verwalten, ist die Verwaltung mittels eines Dateisystems. Das Verwalten von Dokumenten mittels Dateisystemen erlaubt zwar einen Zugriff auf die Dokumente und/oder (soweit verfügbar) die Dokumentenattribute durch das Betriebssystem oder ein beliebiges Anwendungsprogramm. Innerhalb heute üblicher Dateisysteme sind die einzelnen Dokumente jedoch in verschiedenen hierarchisch strukturierten Verzeichnissen angeordnet, wodurch nur eine eingeschränkte Dokumentenverwaltung möglich ist Bei der Suche nach einem bestimmten Dokument oder Dokumentenattribut müssen die verschiedenen Hierarchieebenen des Dateisystems sequentiell (rekursiv) durchsucht werden, was zu langen Suchzeiten führen kann. Außerdem werden Art und Umfang der Dokumentenattribute zur Verwaltung der Dokumente in dem Dateisystem von dem Betriebssystem vorgegeben und können nicht vom Anwender geändert bzw. erweitert werden. Schließlich ist bei den bekannten Dateisystemen keine hierarchische Verwaltung von Speichermedien (z.B. optischer Speicher) zur Erhöhung der Datensicherheit möglich.

Um dem Nachteil der mangeinden Datensicherheit bei Dateisystemen entgegenzuwirken, ist beispielsweise aus der EP 0 665 499 A2 eine hierarchische Speichereinhelt bekannt, bestehend aus magnetischen und optischen Speichermedien und einem Speichertreiber, auf dem mittels eines als SCSI-Bus ausgebildeten Gerätetreibers eine Standard-Festplatten-Schnittstelle abgebildet ist, auf die das Betriebssystem und beliebige Anwendungsprogramme Zugriff haben. Bei einem auf der Speichereinheit generierten Dateisystem ist die hierarchische Verwaltung von Speichermedien möglich.

Die in der EP 0 665 499 A2 offenbarte Speichereinheit stellt jedoch keinerlei Suchmechanismen zur Verfügung. Das Betriebssystem und die Anwendungsprogramme können zwar über die Standard-Festplatten-Schnittstelle direkt auf die Speichereinheit zugreifen, sie können aber lediglich ausgewählte Dokumente in der Speichereinheit ablegen oder aus dieser herausholen, eine gezielte Suche nach bestimmten Dokumenten oder Dokumentenattributen ist indessen nicht möglich. Die offenbarte hierarchische Speichereinheit würde sich somit lediglich als Speicher-Subsystem z.B. für ein Dateisystem oder eine Datenbank eignen, welche ihrerseits die gewünschten Suchmechanismen zur Verfügung stellen könnten. Um aber sowohl die vorteilhaften Zugrlffsmögllchkeiten auf die Speichereinheit aus dem Betriebssystem und den Anwendungsprogrammen als auch die bequemen Such- und Verwaitungsmechanismen der Datenbank nutzen zu können, ergebe sich wiederum das bereits oben geschilderte Problem der Kommunikationsverbindung zwischen dem Betriebssystem und den Anwendungsprogrammen einerseits und der Datenbank andererseits.

Aus der WO 95/16 241 ist dagegen ein Dateisystem bekannt, welches dem Nachteil der durch das Betriebssystem beschränkten Dokumentenattribute entgegenwirken soll. Dem darin offenbarten Dateisystem sind mehrere Quasi-Datenbanken untergeordnet, in denen die Inhalte der erweiterten Indexmerkmale der einzelnen Dokumente abgelegt werden können. Ein Querverweis in der Quasi-Datenbank verweist schließlich auf das nach wie vor in dem Datelsystem abgelegte Dokument. Durch die erweiterten Indexmerkmale können die Dokumente komfortabler verwaltet werden.

Bei dem aus der WO 95/16 241 bekannten Dateisystem haben das Betriebssystem und die Anwendungsprogramme zwar eine Zugriffsmöglichkeit auf die in dem Dateisystem abgelegten Dokumente und es ist möglich, nach bestimmten Dokumenten, Dokumentenattributen oder den Inhalten erweiterter Dokumenten-Indexmerkmale zu suchen. In einer der Quasi-Datenbanken sind jedoch jeweils nur die erweiterten Indexmerkmale eines Verzeichniseintrages des Dateisystems enthalten. Bei der Suche nach bestimmten Dokumenten, Dokumentenattributen oder den Inhalten erweiterter Dokumenten-lndexmerkmale müssen deshalb zunächst aus den einzelnen Verzeichniseinträgen des Dateisystems über Querverweise die zugeordneten Quasi-Datenbanken ermittelt werden und diese dann sequentiell geöffnet, durchsucht und wieder geschlossen werden. Die Suche nach einem Dokument mit einem bestimmten Dokumentenattribut-Inhalt aus dem Betriebssystem oder den Anwendungsprogrammen erfolgt also nicht direkt, sondern immer über den Umweg der Quasi-Datenbanken. Diese zweistufige Suche ist äußerst zeitintensiv und führt bei einer großen Anzahl von Dokumenten und Dokumentenattributen, wie sie beispielsweise in einer Datenbank auf einem Netzwerk mehrerer elektronischer Datenverarbeitungsanlagen häufig abgelegt sind, zu langen Suchzeiten.

Die EP 0 550 368 A2 offenbart ein Verfahren, um mittels eines Gerätetreibers eine programmiertechnisch einheitliche Schnittstelle zwischen Anwendungsprogramm und Datenbank zu realisieren. Dieser Stand der Technik trägt Jedoch zum vorliegenden Problem der Dokumentenverwaltung nicht bei, da auch durch die EP 0 550 368 A2 keine Möglichkeit entsteht, Anwendungsprogrammen, die nicht durch entsprechende Programmierung eigens für einen Datenbankzugriff angepaßt sind, unmittelbar und komfortabei für die Dokumentenbearbeitung einzusetzen.

Zusammenfassend läßt sich aus dem oben angeführten Stand der Technik der folgende Zielkonflikt eruieren. Entweder sind Dokumente und/oder Dokumentenattribute in Datenbanken abgelegt, mit den damit verbundenen vorteilhaften Such- und Verwaltungsmechanismen, jedoch ohne Zugriffsmöglichkeit auf die Dokumente oder die Dokumentenattribute durch das Betriebssystem oder beliebige Anwendungsprogramme. Oder aber die Dokumente und/oder Dokumentenattribute sind in Dateisystemen abgelegt, mit den damit verbundenen vorteilhaften Zugriffsmöglichkeiten durch das Betriebssystem oder beliebige Anwendungsprogramme, jedoch ohne die Möglichkeit einer komfortablen, zeitsparenden Suche oder Verwaltung der Dokumente.

Aus den vorgenannten Nachteilen des Standes der Technik ergibt sich die Aufgabe, ein Verfahren zum Verwalten von Dokumenten der eingangs genannten Art zu schaffen, welches dem Betriebssystem oder einem beliebigen, in keiner Weise angepaßten Anwendungsprogramm einen standardisierten Zugriff auf Dokumente und Dokumentenattribute erlaubt, wobei alle Vorteile einer Datenbank-gestützten Dokumentenverwaltung ausgenutzt werden können.

Zur Lösung der Aufgabenstellung schlägt die vorliegenden Erfindung bei einem Verfahren zum Verwalten von Dokumenten auf einem System von mindestens einer elektronischen Datenverarbeitungsanlage mittels mindestens einer Datenbank vor, daß mittels eines Gerätetreibers dem Betriebssystem der Datenverarbeitungsanlage ein durch die Datenbank gestütztes (virtuelles) Dateisystem zur Verfügung gestellt wird.

Es ist aber durchaus denkbar, die Dokumentenverwaltung andersartig auszubilden. Wichtig ist dabei jedoch, daß das Betriebssystem und/oder die Anwendungsprogramme direkt auf die Dokumente und Dokumentenattribute über die Datenbank zugreifen können. Die Datenbank kann ebenfalls bellebig ausgebildet sein. So ist es beispielsweise denkbar, daß sie nur die Dokumentenattribute enthält und die Dokumente selbst in einem nachgeordneten Archiv oder Dateisystem abgelegt sind oder daß sowohl die Dokumentenattribute als auch die Dokumente in der Datenbank abgelegt sind.

Die Datenbank könnte beispielsweise als relationale, objektorientierte und/oder als Volltext-Datenbank auf einer lokalen Datenverarbeitungsanlage und/oder als verteiltes Datenbanksystem auf einem Netzwerk mehrerer Datenverarbeitungsanlagen ausgebildet sein.

Aus der Sicht des Betriebssystems oder beliebiger Anwendungsprogramme betrachtet scheinen die Dokumente und Dokumentenattribute in einem herkömmlichen Dateisystem abgelegt zu sein. Das hat den Vorteil, daß das Betriebssystem und die Anwendungsprogramme über diese Dateisystem-Schnittstelle auf die Dokumente und Dokumentenattribute direkt zugreifen können. Tatsächlich wird das Datelsystem aber nur nach außen hin simuliert, in Wirklichkeit sind zumindest die Dokumentenattribute, wahlweise auch die Dokumente selbst, in einer Datenbank abgelegt Eine solche Datenbank stellt umfangreiche Such- und Verwaltungsmechanismen zur Verfügung. Das wiederum hat den Vorteil, daß auf die einzelnen Dokumente und Dokumentenattribute besonders schnell und komfortabel zugegriffen werden kann und daß Suchvorgänge, insbesondere bei einer großen Anzahl von zu verwaltenden Dokumenten, entscheidend verkürzt werden. Für das erfindungsgemäße Verfahren zum Verwalten von Dokumenten ergibt sich somit der Vorteil, daß das Betriebssystem und beliebige Anwendungsprogramme über das virtuelle Dateisystem direkt auf die einzelnen Dokumente und Dokumentenattribute zugreifen können, die in einer Datenbank abgelegt sind. Zusätzlich können das Betriebssystem oder beliebige Anwendungsprogramme die Vorteile einer Datenbank voll auszunutzen, wie kurze Suchzeiten, umfangreiche Verwaltungsmöglichkeiten unterschiedlicher Dokumentenarten und problemloses Verwalten großer Datenmengen.

Die Datenbank und die Dokumente werden in ein virtuelles, funktionales Dateisystem abgebildet. Funktional bedeutet in diesem Zusammenhang, daß die Dokumente hier als Objekte betrachtet werden, also kein Unterschied zwischen den Dokumenten und deren Inhalt, Attributen und Eigenschaften (Properties) gemacht wird, Die Abbildung der Datenbank und Dokumente In einem Dateisystem erfolgt mittels eines Gerätetreibers für elektronische Datenverarbeitungsanlagen, der als Steuerung einer Datenbank ausgebildet ist. Der Gerätetreiber stellt der elektronischen Datenverarbeitungsanlage eine Dokumentenverwaltungs-Schnittstelle zur Verfügung, auf die das Betriebssystem oder beliebige Anwendungsprogramme zugreifen können. Die Dokumentenverwaltungs-Schnittstelle ist vorteilhafterweise als eine Dateisystem-Schnittstelle ausgebildet. Der Gerätetreiber wandelt Befehle vom Betriebssystem oder von den Anwendungsprogrammen in entsprechende Datenbankbefehle und umgekehrt Befehle von der Datenbank bzw. Datenbankausgaben in entsprechende Betriebssystem- oder Anwendungsprogrammbefehle um. Durch diesen in der Datenverarbeitung als Mapping bezeichneten Vorgang kann ein virtuelles Dateisystem auf der Datenbank abgebildet werden. Dadurch haben das Betriebssystem und die Anwendungsprogramme direkten Zugriff auf die Dokumente und Dokumentenattribute, die in der Datenbank abgelegt sind. Im Gegensatz zu den meist statischen, herkömmlichen Dateisystemen, kann das Mapping den Anforderungen des Anwenders dynamisch angepaßt werden. Daraus ergeben sich eine hohe Flexibilität bei der Verwaltung von Dokumenten nach dem erfindungsgemäßen Verfahren und damit ein hoher Bedienungskomfort für den Anwender.

Der Gerätetreiber ist an ein bestimmtes Betriebssystem angepaßt. Alie Anwendungsprogramme und Anwendungsprogrammversionen, die unter diesem Betriebssystem arbeiten, haben über den Gerätetreiber auch Zugriff auf das virtuelle Dateisystem. Das hat den Vorteil, daß unterschiedliche Anwendungsprogramme über ein und denselben Gerätetreiber auf die Dokumente und Dokumentenattribute in der Datenbank zugreifen können. Der Einsatz neuer Anwendungsprogrammversionen unter dem gleichen Betriebssystem macht keine Überarbeitung des Gerätetreibers erforderlich. Das reduziert den Wartungsaufwand für die Kommunikationsverbindung zwischen der Datenbank einerseits und dem Betriebssystem und den Anwendungsprogrammen andererseits, was zu erheblichen Kosteneinsparungen führt. Lediglich für unterschiedliche Betriebssysteme muß jeweils ein eigener bzw. angepaßter Gerätetreiber zur Verfügung gestellt werden.

Um mit der Dokumentenverwaltungs-Schnittstelle des Gerätetreibers kommunizieren zu können, das Betriebssystem über eine geeignete Kommunikations-Schnittstelle. Eine solche Schnittstelle ist, beispielsweise in Form einer Dateisystem-Schnittstelle, bei nahezu allen Betriebssystemen standardmäßig vorhanden. Verfügt das Betriebssystem darüber hinaus über eine erweiterbare Schnittstelle, so kann in besonders vorteilhafter Weise ein mit einer entsprechenden Funktionssteuerung ausgebildeter Gerätetreiber zusätzliche Such- und/oder Verwaltungsfunktionen zur Verfügung stellen. Für den Anwender hat es den Anschein, daß die zusätzlichen Funktionen fester Bestandteil des Betriebssystems sind. Diese erlauben es, das erfindungsgemäße Verfahren zum Verwalten von Dokumenten auf einem System von Datenverarbeitungsanlagen hochoptimiert und äußerst komfortabel zu gestalten.

Datenbanken verfügen üblicherweise über eine Vielzahl von unterschiedlichen Schnittstellen, über die auf verschiedene Arten auf-die Datenbanken zugegriffen werden kann (beispielsweise kann auf relationale Datenbanken über verschiedene Schnittstellen auf die Datenbank mit der Datenbanksprache SQL - System Query Language - zugegriffen und so Inhalte in der Datenbankumgebung direkt eingefügt, gelöscht oder manipuliert werden). Diese Offenheit der Datenbanken bleibt selbstverständlich auch beim Einsatz des erfindungsgemäßen Gerätetreibers voll erhalten. Der Gerätetreiber bietet eine besonders vorteilhafte Sicht (beispielsweise als virtuelles Dateisystem) auf die in der Datenbank abgelegten Dokumente, er beschränkt aber nicht die vorhandenen Zugangsmöglichkeiten auf die Datenbank. Jedes in der Datenbank abgelegte Dokument ist für den Anwender über den erfindungsgemäßen Gerätetreiber in dem virtuellen Dateisystem sichtbar, auch wenn es nicht über den Gerätetreiber dort abgelegt worden ist.

Der Gerätetreiber kann als Hardware, beispielsweise als Steckkarte für die Hauptplatine einer elektronischen Datenverarbeitungsanlage, als Software, beispielsweise als zusätzliche Treibersoftware zur Installation mit dem Betriebssystem, oder als Kombination aus Hard- und Software ausgeführt sein.

Das erfindungsgemäße Verfahren zum Verwalten von Dokumenten auf elektronischen Datenverarbeitungsanlagen entstand aus der Überlegung heraus, die Dokumentenverwaltung In Datenbanken bzw. Dateisystemen zu optimieren und standardisieren. Durch den erfindungsgemäßen direkten Zugriff auf die Inhalte der Datenbank wird der Verwaltungsaufwand reduziert, da anstatt dem Einsatz mehrerer verschiedener Kommunikationsverbindungen lediglich ein einziger erfindungsgemäßer Gerätetreiber zur Kommunikation zwischen der Datenbank einerseits und dem Betriebssystem und den Anwendungsprogrammen andererseits eingesetzt wird. Gleichzeitig wird durch den Einsatz des Gerätetreibers der Zugriff auf eine Datenbank aus einem Betriebssystem und bellebigen Anwendungsprogrammen standardisiert und vereinfacht.

So verblüffend einfach die hier offenbarte Lösung der Aufgabe auch erscheinen mag, so wirkungsvoll und weltreichend sind die daraus resultierenden Vorteile. Über die hier genannten wichtigen Vorteile hinaus hat der Gegenstand der Erfindung noch weitere vorteilhafte Auswirkungen auf die Bedienung von und den Umgang mit Datenbanken und den Zugriff auf und die Verwaltung von Dokumenten in Datenbanken, die zum Teil noch gar nicht voll übersehbar sind,

In einer Weiterbildung der Erfindung wird vorgeschlagen, daß die Dokumente mittels erweiterter Indexmerkmale verwaltet werden. Dazu ist die Dokumentenverwaitung bzw. das Dateisystem zu einem Dokumenten-Management-System (DMS) erweitert. Die erweiterten Indexmerkmale sind beispielsweise erweiterte Dokumentenattribute, die über die üblichen Attribute (Dateinamen, Extension, Datum, Uhrzeit, u.a.) hinausgehende Dokumenten-Informationen enthalten. Solche erweiterten Dokumentenattribute sind beispielsweise der Name des Anwenders, Informationen über Zugriffsrechte Dritter und über die Lebenszyklusverwaltung des Dokuments innerhalb der Datenbank, die Dokumentenart, der Dokumententyp, eine Rechnungsnummer, ein Rechnungsbetrag oder aber auch der Volltext der Dokumente. Die Art und der Umfang der erweiterten Indexmerkmale können von dem Anwender innerhalb weiter Grenzen nahezu beliebig geändert bzw. erweitert werden.

Die Verwaltung der Dokumente mittels erweiterter Indexmerkmale stellt zusätzliche Such- und/oder Verwaltungsmechanismen zur Verfügung, auf weiche Insbesondere Anwendungsprogramme zugreifen können. Die zusätzlichen Verwaltungs- und Suchfunktionen des DMS werden ebenfalls von dem Gerätetreiber ausgeführt. Dazu verfügt der Gerätetreiber neben der Dateisystem-Schnittstelle über eine zusätzliche DMS-Schnittstelle als Kommunikations-Schnittstelle, auf welche die Anwendungsprogramme direkt zugreifen können. Anwendungsprogramme, die über eine geeignete Kommunikations-Schnittstelle verfügen, können die erweiterten Indexmerkmale und die daraus resultierenden erweiterten Funktionalitäten unterstützen und ausnutzen. Dann können die Dokumente in der Datenbank aus diesen Anwendungsprogrammen optimal und besonders komfortabel verwaltet werden.

Die Inhalte der erweiterten Indexmerkmale werden nach einer vorteilhaften Ausführungsform der Erfindung automatisch generiert. So ist es beispielsweise möglich, daß der Anwendemame oder Informationen über Zugriffsberechtigungen Dritter automatisch von der elektronischen Datenverarbeitungsanlage übernommen und in der Datenbank abgelegt werden. Das hat den Vorteil, daß der Anwender die vielfältigen Such- und Verwaltungsmechanismen einer Datenbank mit erweiterten Indexmerkmalen nutzen kann, ohne daß er die Inhalte aller Indexmerkmale vorher eingegeben haben muß.

Die automatisch generierten Inhalte der erweiterten Indexmerkmale können gemäß einer weiteren Ausführungsform der Erfindung auch aus den Dokumenten extrahiert werden. Solche extrahierten Inhalte der Indexmerkmale sind beispielsweise der Name des Verfassers, der Titel oder eine Zusammenfassung des Dokuments, ein durch Zeichenerkennung (Optical Character Recognition, OCR) eines im Faksimile-Format vorliegenden Dokuments ermittelter Text oder eine über eine Barcode-Erkennung ermittelte Rechnungsnummer. Es ist aber auch möglich, den gesamten Text aus beliebigen Dokumenten automatisch zu extrahieren und in einer voiltextfähigen Datenbank abzulegen.

In einer anderen Ausführungsform der Erfindung wird vorgeschlagen, daß die Inhalte der erweiterten Indexmerkmale manuell eingegeben werden. Dazu erscheint beispielsweise vor dem Abspeichern oder dem Suchen eines Dokuments eine Abfrage auf dem Bildschirm der elektronischen Datenverarbeitungsanlage und fordert den Anwender auf, die Inhalte bestimmter erweiterter Indexmerkmale über die Tastatur der Datenverarbeitungsanlage manuell einzugeben. Die Bildschirmabfrage wird entweder von dem Gerätetreiber selbst oder von einem der Anwendungsprogramme, die über die Dateisystem-Schnittstelle und die DMS-Schnittstelle des Gerätetreibers auf die Datenbank zugreifen können, gesteuert.

In einer vorteilhaften Ausführungsform der Erfindung wird vorgeschlagen, daß die Datenbank durch ein Archiv ergänzt wird. Ein Archiv dient zum langfristigen Speichern von Dokumenten, um die Datensicherheit in Datenbanken zu erhöhen. Ein Archiv besteht üblicherweise aus einer Kombination von schnellen, wiederbeschreibbaren Speichermedien, wie beispielsweise einer magnetischen Festplatte, und langsameren, meistens einmal beschreibbaren, mehrmals lesbaren Speichermedien, wie beispielsweise einer WORM (Write Once Read Many) oder einer CD-R (CD-Recordable). Diese sogenannte hierarchische Speicherverwaltung erlaubt einerseits kurze Zugriffszeiten auf häufig benötigte Dokumente, die auf den schnellen Speichermedien abgelegt sind, und andererseits eine sichere, langfristige Archivierung selten benötigter Dokumente, die auf den WORM-Speichermedien abgelegt sind. Das Betriebssystem und die Anwendungsprogramme haben somit über den Gerätetreiber freien Zugriff auf eine Datenbank, die ein DMS und ein Archiv aufweist. Das Betriebssystem und die Anwendungsprogramme haben also auch rasche Zugriffsmöglichkeiten auf Dokumente, die bereits zur längerfristigen Speicherung archiviert worden sind.

Eine besondere Weiterbildung der Erfindung schlägt vor, daß die Datenbank und der Gerätetreiber auf einer einzelnen elektronischen Datenverarbeitungsanlage realisiert sind. Bereits auf einer einzelnen elektronischen Datenverarbeitungsanlage kommen die Vorteile des erfindungsgemäßen Verfahrens zum Verwalten von Dokumenten deutlich zum Tragen. So können das Betriebssystem und beliebige Anwendungsprogramme über einen einzigen Gerätetreiber mit der Datenbank kommunizieren, wodurch der Verwaltungsaufwand für die Kommunikationsverbindung erheblich reduziert wird. Damit einher gehen der hochoptimierte, standardisierte und komförtable Zugriff auf Dokumente über die Datenbank, bzw. über das auf die Datenbank aufgeprägte Dateisystem.

In einer vorteilhaften Weiterbildung der Erfindung wird vorgeschlagen, daß mindestens eine Datenbank und mehrere Gerätetreiber auf einem System von mehreren zu einem Netzwerk verbundenen elektronischen Datenverarbeitungsanlagen realisiert sind. Ein solches Netzwerk verfügt üblicherweise über mindestens eine anwenderseitig angeordnete Datenverarbeitungsanlage (Client) und mindestens eine Datenverarbeitungsanlage zur Steuerung des Netzwerkes (Server). Die Datenbank ist üblicherweise auf dem Server installiert. Alte Anwendungsprogramme, die auf Clients mit den erfindungsgemäßen Gerätetreibern installiert sind, haben über das Dateisystem Zugriff auf die Dokumente, die auf dem Server abgelegt sind Der Server verfügt seinerseits über eine entsprechende Netzwerk-Schnittstelle, um die Kommunikation mit den Gerätetreibern der Clients zu ermöglichen. Besonders bei komplexen Netzwerken mit großen Mengen an zu verwaltenden Dokumenten werden die Vorteile des erfindungsgemäßen Verfahrens zur Verwaltung von Dokumenten auf Datenverarbeitungsanlagen deutlich. Dazu zählen die hochoptimierten Verwattungs- und Suchmechanismen über das Netzwerk und die direkte Zugriffsmöglichkeit auf die Dokumente und Dokumentenattribute in der Datenbank auf dem Server aus dem Betriebssystem und den Anwendungsprogrammen beliebiger Clients heraus. Die Kommunikation zwischen der serverseitigen Datenbank und den clientseitigen Anwendungsprogrammen wird durch den erfindungsgemäßen Gerätetreiber wesentlich einfacher und übersichtlicher. Unabhängig von der Anzahl der Anwendungsprogramme auf einem Client wird nur noch eine einzige Anpassung zwischen den Anwendungsprogrammen und der Datenbank, nämlich der Gerätetreiber, benötigt.

Eine bevorzugte Ausführungsform der Erfindung wird im folgenden anhand der Zeichnungen näher erläutert.

Es zeigen:
- Fig. 1: ein Verfahren zum Verwalten von Dokumenten mittels einer Datenbank und Anpassungen nach dem Stand der Technik in schematischer Darstellung;
- Fig. 2: ein Verfahren zum Verwalten von Dokumenten mittels eines Dateisystems nach dem Stand der Technik in schematischer Darstellung;
- Fig. 3: ein Verfahren zum Verwalten von Dokumenten mittels eines Dateisystems mit einem untergeordneten Archivsystem nach dem Stand der Technik in schematischer Darstellung:
- Fig. 4: ein Verfahren zum Verwalten von Dokumenten mittels eines Dateisystems mit zugeordneten Quasi-Datenbanken nach dem Stand der Technik in schematischer Darstellung;
- Fig. 5: das erfindungsgemäße Verfahren zum Verwalten von Dokumenten in schematische Darstellung;
- Fig. 6: das erfindungsgemäße Verfahren zum Verwalten von Dokumenten in mehreren zu einem Netzwerk verbundenen elektronischen Datenverarbeitungsanlagen.

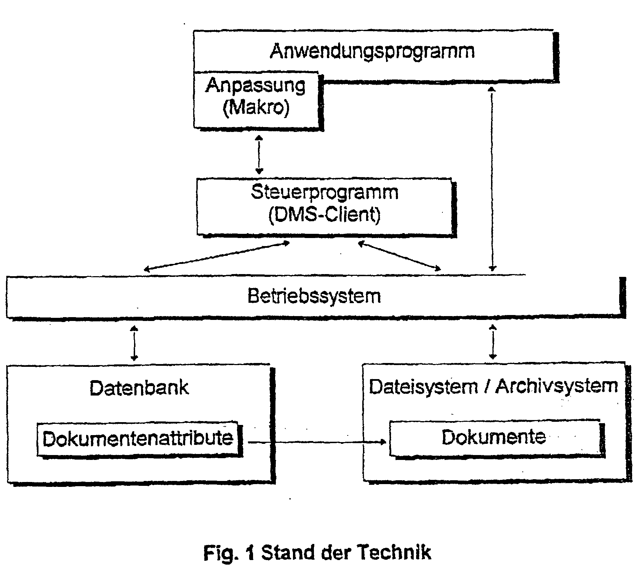

In Fig. 1 ist ein Verfahren zum Verwalten von Dokumenten auf elektronischen Datenverarbeitungsanlagen mittels einer Datenbank dargestellt, wie es aus dem Stand der Technik bekannt ist. Datenbanken verfügen über umfangreiche Zugriffs- und Verwaltungsmechanismen, über welche die darin abgelegten Dokumente zeitoptimiert und komfortabel verwaltet werden können. Um Anwendungsprogrammen, die keinen oder nur einen eingeschränkten funktionalen Zugang zu Datenbanken haben, die Möglichkeit zu geben, diese umfangreiche Zugriffs- und Verwaltungsmechanismen einer Datenbank auszunutzen, muß jedoch eine Kommunikationsverbindung zwischen der Datenbank einerseits und dem Betriebssystem und den Anwendungsprogrammen andererseits hergestellt werden. Dazu ist in Fig. 1 zwischen einem Anwendungsprogramm und der Datenbank eine als Makro ausgebildete Anpassung angeordnet. Das Anwendungsprogramm kommuniziert über das Makro und ein als Dokumenten-Management-System-Client ausgebildetes Steuerprogramm mit der Datenbank und kann so deren umfangreiche Such- und Verwaltungsfunktionen zur Verwaltung der Dokumente mittels Dokumentenattribute und erweiterter Indexmerkmale ausnutzen. Um ein Dokument zu suchen, schickt der Anwender eine Suchanfrage nach einem bestimmten Dokumentenattribut-Inhalt über das Makro oder den DMS-Client an die Datenbank. Nach Auswahl eines Ergebnisdatensatzes der Suchanfrage, wird über einen Querverweis das Dokument aus dem Dateisystem oder Archivsystem geholt und über das Makro oder das Dateisystem (siehe direkte Pfeilverbindung zwischen dem Anwendungsprogramm und dem Betriebssystem) an das Anwendungsprogramm übergeben.

Manche Anwendungsprogramme erlauben auch einen direkten Zugang zu der Datenbank ohne den Umweg über die Anpassung und das Steuerprogramm gehen zu müssen. Diese in der Praxis eher selten anzutreffende Art des Zuganges zu einer Datenbank setzt jedoch voraus, daß das Anwendungsprogramm den direkten Zugang zu der Datenbank erlaubt und daß die Datenbank über eine Kommunikations-Schnittstelle verfügt, die aus dem Anwendungsprogramm heraus, beispielsweise mittels eines Makros, direkt angesprochen werden kann.

Außerdem sind bei beiden Arten des Zugangs zu der Datenbank die einzelnen Makros streng an das jeweilige Anwendungsprogramm adaptiert (proprietär) und es bedarf eines großen Arbelts- und Zeitaufwandes, die vielen verschiedenen Makros für die einzelnen Anwendungsprogramme zu erstellen und zu warten.

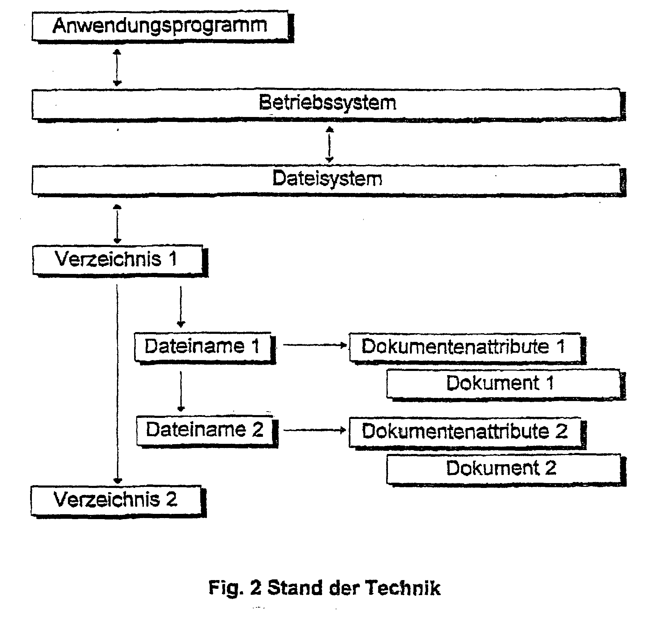

In Fig. 2 ist ein anderes ebenfalls aus dem Stand der Technik bekanntes und heute weit verbreitetes Verfahren zum Verwalten von Dokumenten auf elektronischen Datenverarbeitungsanlagen dargestellt. Dabei werden die Dokumente in den einzelnen Verzeichnissen eines Dateisystems abgelegt. Ein Anwendungsprogramm und das Betriebssystem haben über das Dateisystem in bekannter Weise einen direkten Zugriff auf die Dokumente und die Dokumentenattribute. Allerdings stellt ein Dateisystem kaum Such- oder Verwaltungsmechanismen zur Verfügung. Die Suche nach einem bestimmten Dokument oder Dokumentenattribut-Inhalt in dem Dateisystem erfolgt sequentiell (rekursiv) und ist deshalb vor allem bei einer großen Anzahl von zu verwaltenden Dokumenten äußerst zeitintensiv. Außerdem werden Art und Umfang der Dokumentenattribute zur Verwaltung der Dokumente in dem Dateisystem von dem Betriebssystem vorgegeben und können nicht vom Anwender geändert bzw. erweitert werden. Schließlich ist bei den bekannten Dateisystemen keine hierarchische Verwaltung von Speichermedien (z.B. optischer Speicher) zur Erhöhung der Datensicherheit möglich.

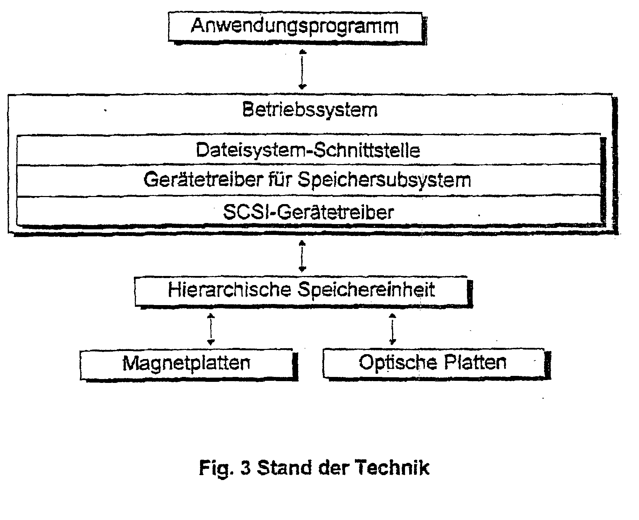

Um dem Nachteil der mangelnden Datensicherheit bei Dateisystemen entgegenzuwirken, ist beispielsweise aus der EP 0 665 499 A2 die in Fig. 3 schematisch dargestellte hierarchische Speichereinheit bekannt, auf der ein Dateisystem generiert wird und die eine hierarchische Verwaltung von Speichermedien ermöglicht. Dazu bildet ein SCSI-Gerätetreiber ein Dateisystem auf einem Archiv-System ab. Über die Dateisystem-Schnittstelle des Gerätetreibers haben die einzelnen Anwendungsprogramme nach Art eines Dateisystems, wie in Fig. 2 dargestellt, direkten Zugriff auf das Archiv-System, In welchem die einzelnen Dokumente mit den Dokumentenattributen archiviert sind. Die Speichereinheit aus Fig. 3 stellt jedoch keinerlei Suchmechanismen zur Verfügung und würde sich lediglich als Speicher-Subsystem für ein Dateisystem oder eine Datenbank eignen.

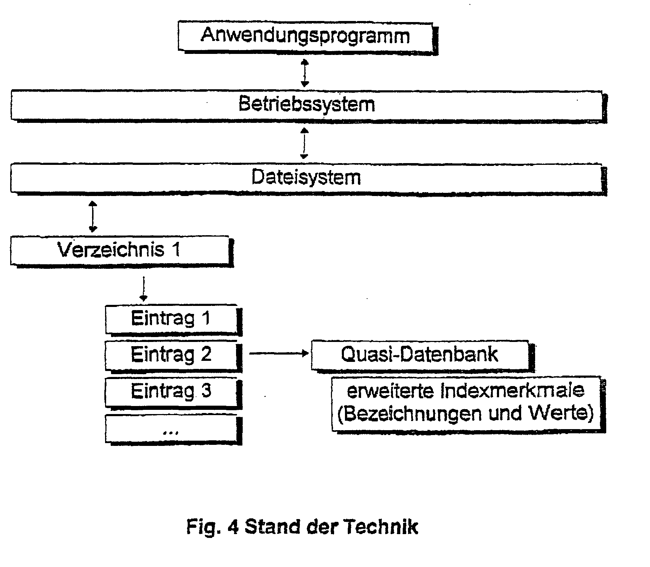

In Fig. 4 ist dagegen ein Dateisystem dargestellt, wie es beispielsweise aus der WO 95/16 241 bekannt ist. Dabei werden die Dokumente in den einzelnen Verzeichnissen eines aus Fig. 2 bekannten Dateisystems abgelegt. Ein Anwendungsprogramm und das Betriebssystem haben über das Dateisystem in bekannter Weise einen direkten Zugriff auf die Dokumente und die Dokumentenattribute. Die Inhalte der einzelnen Verzeichniseinträge des Dateisystems verweisen für jedes einzelne Dokument auf eine entsprechende Quasi-Datenbank, in der Bezeichnungen und Werte der erweiterten Indexmerkmale dieses Dokumentes abgelegt sind. Die Suche nach einem Dokument mit einem bestimmten Dokumentenattribut-Inhalt aus dem Betriebssystem oder einem Anwendungsprogramm erfolgt allerdings nicht direkt, sondem Immer über den Umweg der Quasi-Datenbanken. Diese zweistufige Suche ist äußerst zeitintensiv und führt bei einer großen Anzahl von Dokumenten und Dokumentenattributen zu extrem langen Suchzeiten, zumal zuerst die Bezeichnung des Indexmerkmales in der Quasi-Datenbank verglichen werden muß, bevor der Wert (Inhalt) geprüft werden kann.

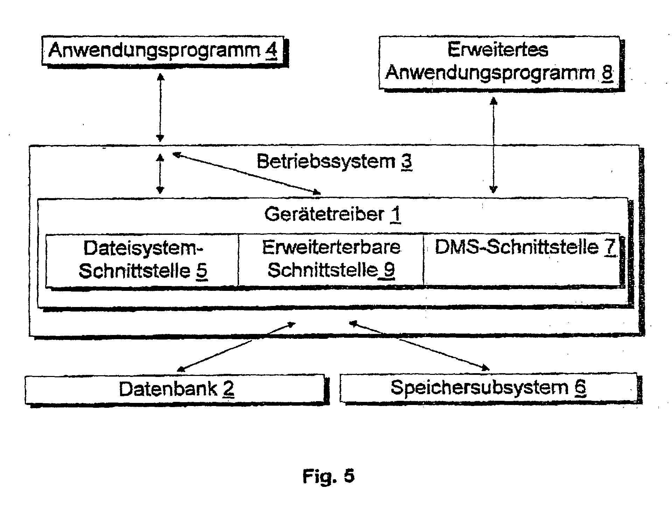

Vor dem Hintergrund des in den Fig. 1 - 4 dargestellten Standes der Technik schlägt die Erfindung zur Optimierung der Verwaltung von Dokumenten auf Datenverarbeltungsanlagen das in Fig. 5 schematisch dargestellte Verfahrenvor. Dabei wird ein Dateisystem mittels eines betriebssystemspezifischen Gerätetreibers in Verbindung mit der Datenbank abgebildet.

Das Betriebssystem 3 und die Anwendungsprogramme 4 haben über eine Dateisystem-Schnittstelle 5 des Gerätetreibers 1 direkten Zugriff auf die Datenbank 2 und die darin abgelegten Dokumentenattribute. Die Dokumente selbst sind entweder auch in der Datenbank 2 oder in einem Speichersubsystem 6 (z.B. Archiv) abgelegt. Der Gerätetreiber 1 stellt dem Betriebssystem 3 (und den Anwendungsprogrammen) ein virtuelles Dateisystem zur Verfügung, über das sie direkt auf die Datenbank 2 zugreifen können. Dazu wandelt der Gerätetreiber 1 über die Dateisystem-Schnittstelle 5 Befehle vom Betriebssystem 3 odervon den Anwendungsprogrammen 4 in entsprechende Datenbankbefehle und umgekehrt Befehle von der Datenbank bzw. Datenbankausgaben in entsprechende Betriebssystem- oder Anwendungsprogrammbefehle um (Mapping).

Andererseits können das Betriebssystem 3 und die Anwendungsprogramme 4 bzw. erweiterte Anwendungsprogramme auch die an sich bekannten, umfangreichen Such- und Verwaltungs-funktionen einer Datenbank ausnutzen. Durch den Einsatz einer Dokumenten-Management-System-Schnittstelle (DMS-Schnittstelle) 7 können die Dokumente zusätzlich mittels erweiterter Indexmerkmale verwattetwerden. Anwendungsprogramme 8, die über eine geeignete Kommunikations-Schnittstelle verfügen (erweiterte Anwendungsprogramme), können die erweiterten Indexmerkmale und die daraus resultierenden erweiterten Funktionalitäten unterstützen und ausnutzen. Dann können die Dokumente in der Datenbank 2 bzw. in dem Speichersubsystem 6 aus diesen Anwendungsprogrammen 8 optimal und besonders komfortabel verwaltet werden.

Mit Hilfe einer erweiterbaren Schnittstelle 9 kann der erfindungsgemäße Gerätetreiber darüber hinaus zusätzliche Such- undloder Verwaltungsfunk-tionen zur Verfügung stellen. Für den Anwender hat es den Anschein, daßdie zusätzlichen Funktionen fester Bestandteil des Betriebssystems sind. Tatsächlich werden sie jedoch durch eine entsprechende Funktionssteuerungdes Gerätetreibers 1 zur Verfügung gestellt. Die zusätzlichen Funktionenerlauben es, das erfindungsgemäße Verfahren zum Verwalten vonDokumenten auf einem System von Datenverarbeitungsanlagen hochoptimiert und äußerst komfortabel zu gestalten.

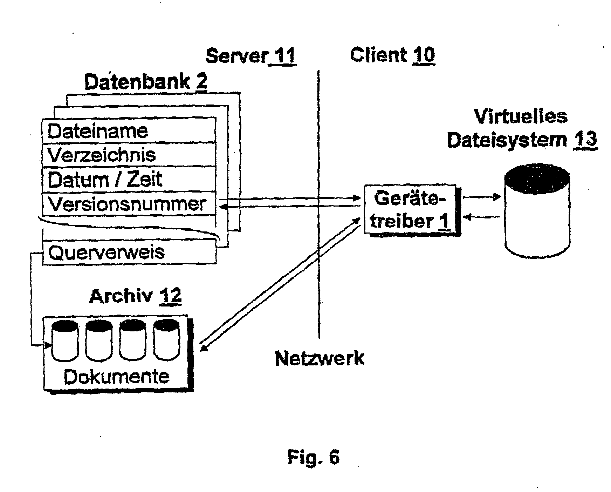

In Fig. 6 ist das erfindungsgemäße Verfahren zum Verwalten von Dokumenten auf einem System von mehreren zu einem Netzwerk verbundenen elektronischen Datenverarbeitungsanlagen schematisch dargestellt. Beispielhaft für ein solches Netzwerk sind in Fig. 6 eine anwenderseitig angeordnete Datenverarbeitungsanlage (Client) 10 und eine Datenverarbeitungsanlage 11 zur Steuerung des Netzwerkes (Server) dargestellt. Die Datenbank 2 mit den darin abgelegten inhalten der Dokumen-tenattributen und Querverweisen auf die Jeweiligen Dokumente ist auf demServer 11 Installiert. Die Dokumente selbst sind in einem Archiv 12 auf dem Netzwerk-Server 11 oder einem eigenen Archiv-Server abgelegt. Der Client 10 verfügt über einen erfindungsgemäßen Gerätetreiber 1, über den auf dem Client 10 installierte Anwendungsprogramme (nicht dargestellt) über das virtuelle Dateisystsm 13 auf die Dokumentenattribute und die Dokumente direkt zugreifen können.

Das erfindungsgemäße Verfahren ermöglicht ein erheblich optimiertes Verwalten von Dokumenten auf Datenverarbeitungsanlagen. Durch den erfindungsgemäßen Gerätetreiber wird außerdem der Zugriff von Betriebssystem und Anwendungsprogrammen auf eine Datenbank standardisiert, vereinfacht und gleichzeitig wesentlich komfortabler für einen Anwender.

## Patentansprüche

1. Verfahren zum Verwalten von Dokumenten auf einem System von mindestens einer elektronischen Datenverarbeitungsanlage mittels mindestens einer Datenbank (2), **dadurch gekennzeichnet, daß** mittels eines Gerätetreibers (1) dem Betriebssystem (3) der Datenverarbeitungsanlage ein durch die Datenbank (2) gestütztes (virtuelles) Dateisystem zur Verfügung gestellt wird, und
die Dokumente mittels erweiterter Indexmerkmale, wobei die Inhalte der erweiterten Indexmerkmale entweder automatish geneneriert werden oder aus den Dokumenten extrahiert werden, verwaltet werden.

2. Verfahren zum Verwalten von Dokumenten nach Anspruch 2, **dadurch gekennzeichnet, daß** die Inhalte der erweiterten Indexmerkmale manuell eingegeben werden.

3. Verfahren zum Verwalten von Dokumenten nach einem der Ansprüche 1 bis 5, **dadurch gekennzeichnet, daß** die Datenbank durch ein Archiv (12) ergänzt wird.

4. Verfahren zum Verwalten von Dokumenten nach einem der Ansprüche 1 bis 6, **dadurch gekennzeichnet, daß** die Datenbank und der Gerätetreiber (1) auf einer einzeinen elektronischen Datenverarbeitungsanlage operieren.

5. Verfahren zum Verwalten von Dokumenten nach einem der Ansprüche 1 bis 7, **dadurch gekennzeichnet, daß** mindestens eine Datenbank und mindestens ein Gerätetreiber (1) auf einem System von mehreren zu einem Netzwerk verbundenen elektronischen Datenverarbeitungsanlagen operieren.

6. Gerätetreiber zur Durchführung des Verfahrens nach einem der Ansprüche 1 bis 8, **dadurch gekennzeichnet, daß** der Gerätetreiber (1) als Steuerung mit mindestens einer Datenbank (2) ausgebildet ist.

7. Gerätetreiber nach Anspruch 9, **dadurch gekennzeichnet, daß** der Gerätetreiber (1) der elektronischen Datenverarbeitungsanlage eine Dokumentenverwaltungs-Schnittstelle zur Verfügung stellt.

8. Gerätetreiber nach Anspruch 10, **dadurch gekennzeichnet, daß** die Dokumentenverwaltungs-Schnittstelle als eine Dateisystem-Schnittstelle (5) ausgebildet ist.

9. Gerätetreiber nach Anspruch 11, **dadurch gekennzeichnet, daß** der Gerätetreiber als virtueller Dateisystemtreiber ausgebildet ist.

10. Gerätetreiber nach den Ansprüchen 11 und 12, **dadurch gekennzeichnet, daß** die Dokumentenverwaltungs-Schnittstelle zum einen Teil als eine Dateisystem-Schnittstelle (5) und zum anderen Teil als eine Dokumenten-Management-System-Schnittstelle (7) ausgebildet ist.

11. Gerätetreiber nach einem der Ansprüche 9 bis 13, **dadurch gekennzeichnet, daß** der Gerätetreiber (1) eine Funktionssteuerung aufweist, die über eine erweiterbare Schnittstelle (9) des Betriebssystems (3) zusätzliche Funktionen zur Verfügung stellt, die scheinbar Bestandteil des Betriebssystems (3) sind.

## Claims

1. Process for managing documents on a system of at least one electronic data processing unit by means of at least one database (2), **characterized in that** a (virtual) file system supported by the database (2) is made available by means of a device driver (1) to the operating system (3) of the data processing unit, and the documents are managed by means of expanded index features, the contents of the expanded index features either being generated automatically or extracted from the documents.

2. Process for managing documents according to claim 2, **characterized in that** the contents of the expanded index features are entered manually.

3. Process for managing documents according to one of claims 1 to 5, **characterized in that** the database is supplemented by an archive (12).

4. Process for managing documents according to one of claims 1 to 6, **characterized in that** the database and the device driver (1) operate on an individual electronic data processing unit.

5. Process for managing documents according to one of claims 1 to 7, **characterized in that** at least one database and at least one device driver (1) operate on a system of several data processing units electronically connected to form a network.

6. Device driver for carrying out the process according to one of claims 1 to 8, **characterized in that** the device driver (1) is developed as a control means with at least one database (2).

7. Device driver according to claim 9, **characterized in that** the device driver (1) makes a document-managing interface available to the electronic data processing unit.

8. Device driver according to claim 10, **characterized in that** the document-managing interface is developed as a file system interface (5).

9. Device driver according to claim 11, **characterized in that** the device driver is developed as a virtual file system driver.

10. Device driver according to claims 11 and 12, **characterized in that** the document-managing interface is developed on the one hand as a file system interface (5) and on the other hand as a document-management-system interface (7).

11. Device driver according to one of claims 9 to 13, **characterized in that** the device driver (1) has a function control means which makes additional functions available via an expandable interface (9) of the operating system (3), which are apparently a constituent of the operating system (3).

## Revendications

1. Procédé de gestion de documents sur un système d'au moins une installation de traitement de données électronique au moyen d'au moins une banque de données (2), **caractérisé en ce qu'**au moyen d'un driver d'appareil (1), il est mis à disposition du système de fonctionnement (3) de l'installation de traitement de données un système de fichiers (virtuel) supporté par la banque de données (2), et **en ce que** les documents sont gérés au moyen de caractéristiques d'indice élargies, où les contenus des caractéristiques d'indice élargies soit sont générés automatiquement soit sont extraits des documents.

2. Procédé de gestion de documents selon la revendication 1, **caractérisé en ce que** les contenus des caractéristiques d'indice élargies sont entrés manuellement.

3. Procédé de gestion de documents selon l'une des revendications 1 ou 2, **caractérisé en ce que** la banque de données est complétée par un archive (12).

4. Procédé de gestion de documents selon l'une des revendications 1 à 3, **caractérisé en ce que** la banque de données et le driver d'appareil (1) opèrent sur une seule installation de traitement de données électronique.

5. Procédé de gestion de documents selon l'une des revendications 1 à 4, **caractérisé en ce qu'**au moins une banque de données et au moins un driver d'appareil (1) opèrent sur un système de plusieurs installations de traitement de données électroniques reliées en réseau.

6. Driver d'appareil pour la mise en oeuvre du procédé selon l'une des revendications 1 à 5, **caractérisé en ce que** le driver d'appareil (1) est réalisé sous forme de commande avec au moins une banque de données (2).

7. Driver d'appareil selon la revendication 6, **caractérisé en ce que** le driver d'appareil (1) met à disposition de l'installation de traitement de données électronique une interface de gestion de documents.

8. Driver d'appareil selon la revendication 7, **caractérisé en ce que** l'interface de gestion de documents est réalisée sous forme d'interface de système de fichiers (5).

9. Driver d'appareil selon la revendication 8, **caractérisé en ce que** le driver d'appareil est réalisé sous forme de driver de système de fichiers virtuel.

10. Driver d'appareil selon les revendications 8 et 9, **caractérisé en ce que** l'interface de gestion de documents est réalisé en partie comme interface de système de fichiers (5) et en partie comme interface de système de gestion de documents (7).

11. Driver d'appareil selon l'une des revendications 6 à 10, **caractérisé en ce que** le driver d'appareil (1) présente une commande de fonctions qui met à disposition, par une interface apte à être élargie (9) du système de fonctionnement (3), des fonctions additionnelles qui font apparemment partie du système de fonctionnement (3).
